Europäisches Patentamt

European Patent Office

Office européen des brevets

(11) Veröffentlichungsnummer: **0 433 669 A1**

(12) **EUROPÄISCHE PATENTANMELDUNG**

(21) Anmeldenummer: 90121928.7

(22) Anmeldetag: 16.11.90

(51) Int. Cl.⁵: **B62D 37/04**, A01B 63/00, A01B 73/00

(30) Priorität: 20.12.89 DE 3942057

(43) Veröffentlichungstag der Anmeldung:
26.06.91 Patentblatt 91/26

(84) Benannte Vertragsstaaten:
**DE FR GB IT**

(71) Anmelder: **ROBERT BOSCH GmbH**
**Postfach 10 60 50**
**W-7000 Stuttgart 10(DE)**

(72) Erfinder: **Höfer, Friedrich-Wilhelm, Dipl.-Ing.**
**(FH)**
**Georg Friedrich Händel Weg 6**
**W-7251 Hirschlanden(DE)**
Erfinder: **Schumacher, Werner, Dipl.-Ing.**
**Danziger Strasse 11**
**W-7144 Asperg(DE)**
Erfinder: **Mohaupt, Hubert**
**Fröbelstrasse 7**
**W-7120 Bietigheim-Bissingen(DE)**
Erfinder: **Hesse, Horst, Dr.-Ing.**
**Auberlenweg 13B**
**W-7000 Suttgart 1(DE)**

(54) **Landwirtschaftliche nutzbare Zugmaschine mit einem System zur dynamischen Stabilisierung seiner Bewegungen.**

(57) Es wird ein Traktor (10) mit angelenktem Anbaugerät (11) vorgeschlagen, bei dem die elektrohydraulische Hubwerks-Regeleinrichtung (19) zusätzlich bei Transportfahrten als aktives System zur Dämpfung von Nickschwingungen des Traktors (10) arbeitet. Um negative Auswirkungen der Schwingungsdämpfung auf normale Arbeitsabläufe bzw. Betriebszustände der Hubwerksregelung zu vermeiden, wird deren Wirksamkeit abhängig von verschiedenen Einschaltbedingungen begrenzt, wobei dies besonders einfach geschieht, wenn durch geeignete Ausbildung des Reglers (34, 18) das Schwingungsdämpfungs-System abhängig von den Einschaltbedingungen Transportstellung und Fahrgeschwindigkeit erfolgt.

EP 0 433 669 A1

## LANDWIRTSCHAFTLICH NUTZBARE ZUGMASCHINE MIT EINEM SYSTEM ZUR DYNAMISCHEN STABILISIERUNG SEINER BEWEGUNGEN

Stand der Technik

Die Erfindung geht aus von einer landwirtschaftlich nutzbaren Zugmaschine, insbesondere Traktor oder Baumaschinenfahrzeug, mit einem System zur dynamischen Stabilisierung seiner Bewegungen, insbesondere von Nickschwingungen um eine im wesentlichen horizontale Schwingachse, nach der Gattung des Hauptanspruchs.

Aus der DE-OS 33 46 892 ist ein Traktor mit angehängtem Pflug und mit einem System zur Schwingungsdämpfung bekannt, bei dem mit Hilfe der hydraulischen Regeleinrichtung zur Pflugverstellung eine Schwingungsdämpfung des angehängten Pfluges in Aushubstellung bzw. Transportstellung bei fahrendem Traktor angestrebt wird. Zur Verbesserung der Lenkfähigkeit und der Fahrstabilität der Zugmaschine mit angelenkter Gerätemasse wird dabei ein Regler eingesetzt, der durch geeignete Stellbewegungen am Hubwerk Fahrschwingungen bedämpft und dadurch die dynamischen Krafte im Anlenkgestänge begrenzt. Vor allem bei schneller Fahrt der Zugmaschine mit ausgehobenem Pflug sollen auftretende Nickschwingungen gedämpft werden, indem der Pflug Bewegungen mit begrenzter Amplitude um eine mittlere Aushubstellung herum ausführt. Es kann nun von Nachteil sein, daß dieses Schwingungsdämpfungs-System sich auf bestimmte Betriebszustände bzw. Arbeitsabläufe der Hubwerksregelung negativ auswirken kann. Es muß deshalb eine Abgrenzung für die Wirksamkeit dieses Dämpfungs-Systems getroffen werden. Obwohl diese Schwingungsdämpfung nur bei Transportfahrt benötigt wird und dieser Funktionszustand dadurch signalisiert wird, daß an einem Bedienteil ein Hebel aus seiner Regelstellung in eine Transportstellung umstellbar ist, genügt eine solche einzige Einschaltbedingung für das Schwingungsdämpfungs-System nicht den Anforderungen in der Praxis.

Ferner ist aus der DE-OS 34 46 811 ein Traktor mit angekoppeltem Pflug bekannt, dessen zugeordnete elektrohydraulische Regeleinrichtung als aktives Schwingungsdämpfungs-System arbeiten kann. Das zugeordnete elektronische Steuergerät weist dabei einen zusätzlichen Eingang auf, an dem für die Schwingungsdämpfung kennzeichnende Parameter eingebbar sind. Als Parameter kann dabei auch ein Bereich in Betracht kommen, in dem das Dämpfungssystem wirksam ist. Nähere Angaben zur Auswahl und Gestaltung der Bereiche werden hierbei nicht gemacht.

Vorteile der Erfindung

Die erfindungsgemäße landwirtschaftlich nutzbare Zugmaschine mit einem System zur dynamischen Stabilisierung seiner Bewegungen mit den kennzeichnenden Merkmalen des Hauptanspruchs hat demgegenüber den Vorteil, daß das Schwingungsdämpfungs-System in seiner Wirksamkeit so eingegrenzt ist, daß sich unabhängig von den auftretenden Betriebszuständen und den jeweiligen Arbeitsabläufen der Hubwerksregeleinrichtung keine negativen Auswirkungen einstellen. Auf diese Weise läßt sich mit relativ einfachen und kostengünstigen Mitteln ein sicher arbeitendes System ermöglichen, das zudem für eine Bedienungsperson leicht handhabbar ist.

Durch die in den Unteransprüchen aufgeführten Maßnahmen sind vorteilhafte Weiterbildungen und Verbesserungen der im Hauptanspruch angegebenen Zugmaschine möglich. Dabei ist es besonders günstig, die Zugmaschine nach den Ansprüchen 2 bis 12 auszubilden, wodurch in zweckmäßiger Weise zusätzliche Einschaltbedingungen berücksichtigt werden können. Vorteilhaft ist es ferner, die Zugmaschine nach den in den Ansprüchen 13 bis 21 angegebenen Verfahren zu betreiben.

Zeichnung

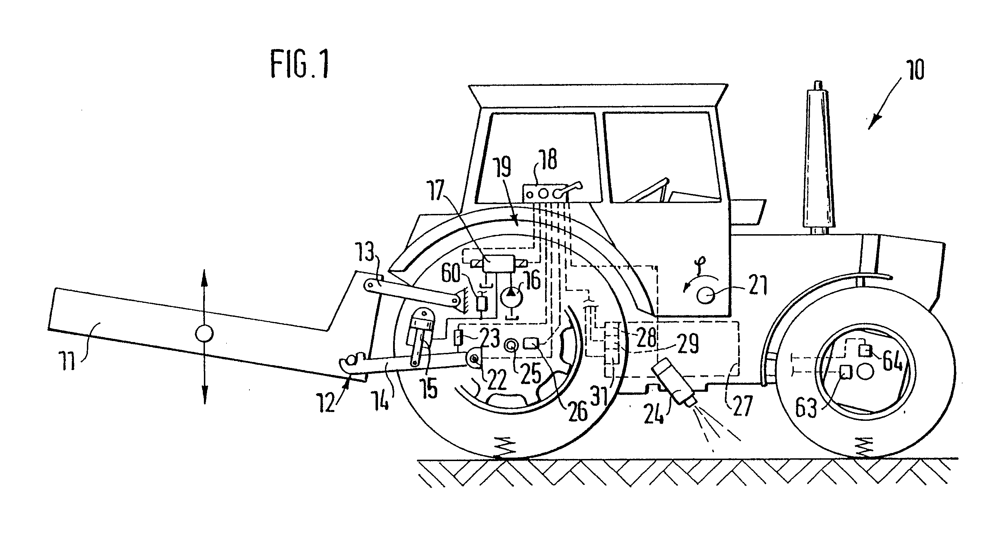

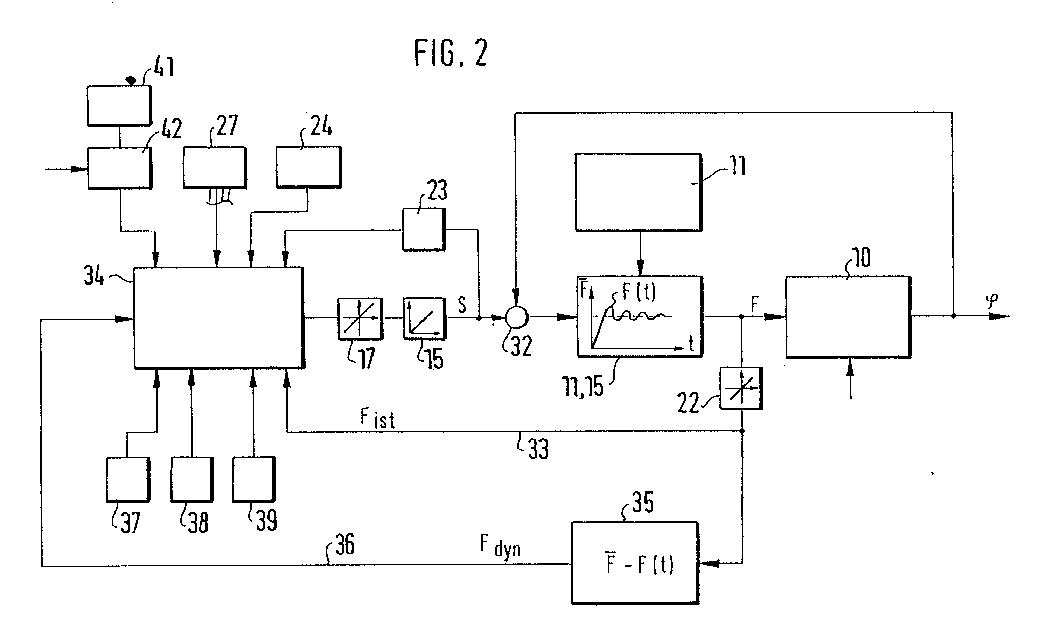

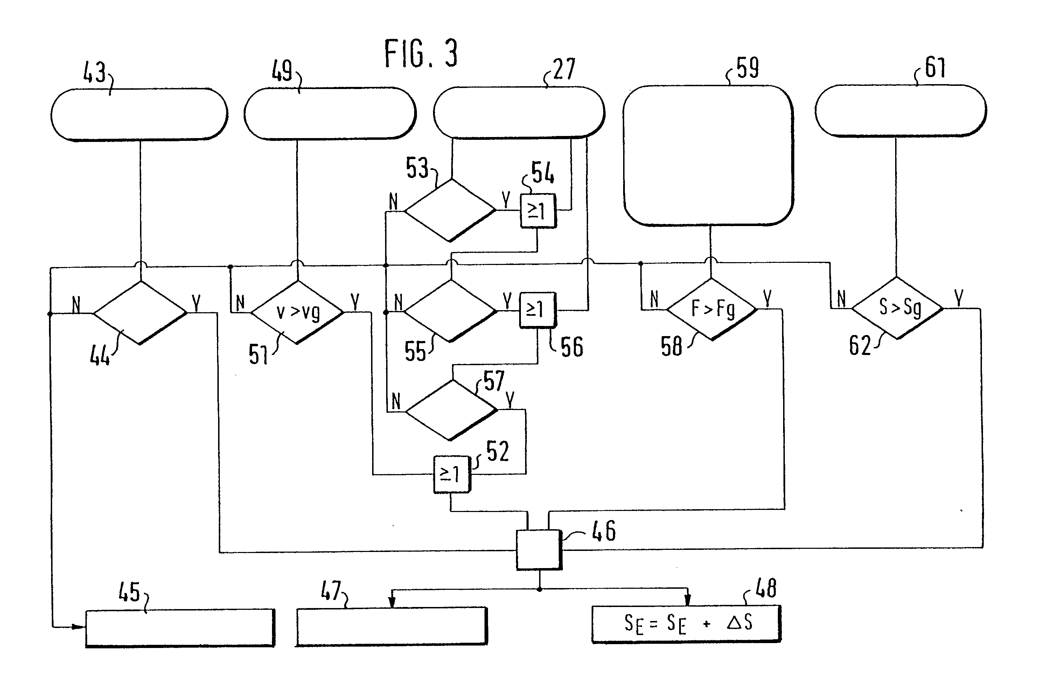

Ein Ausführungsbeispiel der Erfindung ist in der Zeichnung dargestellt und in der nachfolgenden Beschreibung näher erläutert. Es zeigen die Figur 1 einen Traktor mit angekoppeltem Anbaugerät in Transportstellung und mit einem System zur aktiven Schwingungsdämpfung, Figur 2 ein Blockschaltbild für das System zur Schwingungsdämpfung nach Figur 1 in vereinfachter Darstellung und Figur 3 ein Flußdiagramm in vereinfachter Darstellung, nach dem die Regeleinrichtung nach Figur 2 verschiedene Einschaltbedingungen verarbeitet.

Beschreibung des Ausführungsbeispiels

In der Figur 1 ist ein Gespann bestehend aus einem Traktor 10 als landwirtschaftlich nutzbare Zugmaschine und einem heckseitig befestigten Anbaugerät 11 dargestellt, das beispielsweise als Pflug ausgebildet sein kann. Das Anbaugerät 11 ist in an sich bekannter Weise über ein Dreipunktgestänge 12 mit Oberlenker 13 und Unterlenker 14 am Traktor 10 höhenverstellbar angelenkt. Zur Verstellung des Anbaugeräts 11 greift am Unterlenker 14 ein hydraulischer Kraftheber 15 an, der in einen hydraulischen Kreis mit einer Pumpe 16 und einem elektrohydraulischen Regelventil 17 geschaltet ist. Das Regelventil 17 wird über ein elektronisches Steuergerät 18 angesteuert, das ebenso wie das Regelventil 17 und das Dreipunktgestänge 12 mit dem Kraftheber 15 Teile einer elektrohydraulischen Hubwerks-Regeleinrichtung 19 bildet.

Mit Hilfe dieser Regeleinrichtung 19 kann beispielsweise ein als Pflug ausgebildetes Anbaugerät 11 nicht nur in Betriebsstellungen in verschiedenen Regelungsarten, wie Zugkraft-, Lage-, Druck-, Schlupf-, Misch-Regelung etc., betrieben werden, sondern auch aus der Betriebsstellung heraus in die gezeichnete Transportstellung verfahren werden, in der es mit einer begrenzten Amplitude um eine mittlere Transportstellung herum bewegt werden kann. Die Regeleinrichtung 19 steuert dabei die Bewegung des als Tilgermasse verwendeten Anbaugeräts 11 derart, daß die Schwingungen des Traktors 10, insbesondere dessen Nickbewegungen um eine horizontal liegende, quer zur Fahrtrichtung verlaufende Schwingungsachse 21 aktiv gedämpft werden. Die Regeleinrichtung 19 verarbeitet zu diesem Zweck die Istwertsignale von mehreren Sensoren, wozu einmal der Unterlenker 14 über einen an sich bekannten Kraftmeßbolzen 22 am Traktor 10 angelenkt ist. Der Kraftmeßbolzen 22 meldet zu diesem Zweck zu den an ihm auftretenden Kräften proportionale Signale an das elektronische Steuergerät 18. Ferner ist ein Lagesensor 23 vorgesehen, welcher von der Lage des Anbaugeräts 11 relativ zum Schlepper 10 abhängige Signale an das Steuergerät 18 meldet. Ferner ist am Traktor 10 ein Radarsensor 24 angeordnet, mit dessen Hilfe die absolute Fahrgeschwindigkeit des Traktors 10 relativ zum Boden ermittelt wird. Die vom Radarsensor 14 ermittelten Signale werden ebenfalls dem Steuergerät 18 zugeführt. Ferner ist der Hinterachse 25 des Traktors 10 ein Drehzahlgeber 26 zugeordnet, welcher mit dem Steuergerät 18 in Wirkverbindung steht und mit dessen Hilfe die theoretische Fahrgeschwindigkeit ermittelbar ist.

Beim Fahren des Traktors 10 über unebenes Gelände treten Nick- und Vertikalschwingungen des Gespanns auf, die infolge der Massenträgheit des Anbaugeräts 11 zu Beschleunigungskräften führen, die vom Kraftmeßbolzen 22 gemessen werden. Diese Signale der Kraftmesseinrichtung werden in der Regeleinrichtung 19 dazu benutzt, um eine aktive Schwingungsdämpfung zu betreiben, wie dies als an sich bekannt vorausgesetzt wird.

Fernerhin sind an einem Getriebe 27 des Traktors 10 mehrere Sensoren angeordnet, über welche bestimmte Funktionszustände des Getriebes 27 abfragbar sind. So ist am Getriebe 27 ein erster Sensor 28 vorgesehen, welcher abhängig davon, ob ein Allrad-Antrieb ein- oder ausgeschaltet ist, Signale an das Steuergerät 18 abgibt. Über einen zweiten Sensor 29 am Getriebe 27 wird abgefragt, ob eine Differentialsperre im Antrieb des Traktors 10 ausgeschaltet ist und ein dementsprechendes Signal an das Steuergerät 19 gegeben. Ferner ist am Getriebe 27 ein dritter Sensor 31 angeordnet, mit dessen Hilfe abfragbar ist, ob der jeweils eingelegte Gang des Getriebes 27 größer ist als eine vorbestimmte, als Grenzwert dienende, niedrige Gangstufe. Das Ausgangssignal des dritten Sensors 31 wird ebenfalls im Steuergerät 18 verarbeitet.

Die Figur 2 zeigt nun als Blockschaltbild in vereinfachter Darstellung ein System zur dynamischen Stabilisierung der Bewegungen des Fahrzeugs, also zur aktiven Schwingungsdämpfung, wie es in der Hubwerks-Regeleinrichtung 19 nach Figur 1 integriert ist, wobei unterschiedliche Einschaltbedingungen wirksam werden können.

Dabei bildet das System Anbaugerät 11 - Kraftheber 15 zusammen mit dem Traktor 10 eine schwingfähige Einheit, die durch Stöße von außen auf den Traktor 10 zu Schwingungen angeregt werden kann. Der Nickwinkel $\phi$ des Traktors 10 um seine Schwingachse 21 wird durch nicht näher gezeichnete kinematische Faktoren verändert und auf einen ersten Summenpunkt 32 zurückgeführt. Dabei wirkt auf die schwingfähige Einheit 11, 15 auch eine von der Masse des Anbaugeräts 11 herrührende statische Kraft, so daß die gesamte Kraft F auf den Kraftmeßbolzen 22 einwirkt. Wie die Figur 2 ferner zeigt, wird das Ausgangssignal des Kraftmeßbolzens 22 in der Hubwerks-Regeleinrichtung in zweifacher Weise genutzt, einmal für die normale Hubwerks-Regelung, wozu das Ausgangssignal des Kraftmeßbolzens 22 als Istwert der Kraft über eine Verbindung 33 auf einen Regler 34 rückgeführt wird und zum anderen als Regelgröße im Schwingungsdämpfungs-System, wozu mit Hilfe eines elektrischen Netzwerkes 35 die dynamischen und die statischen Kraftanteile voneinander getrennt werden, so daß über eine Verbindung 36 dem Regler 34 für die Schwingungsdämpfung allein die dynamischen Kraftanteile F dyn. zugeführt werden. Das Ausgangssignal des Reglers 34 wird über das elektrohydraulisch und proportional arbeitende Regelventil 17 in eine geschwindigkeitsabhängige Größe umgewandelt, und dem Kraftheber 15 eingegeben, der an seinem Ausgang ein wegabhängiges Signal s an den ersten Summenpunkt 32 weitergibt. Dieses wegabhängige Signal wird vom Lagesensor 23 erfaßt und als Regelgröße dem Regler 34 zugeführt.

Der Regler 34 ist in einer Technik als Mikroprozessor ausgeführt und in dem elektronischen Steuergerät 18 integriert. Wie Figur 2 ferner zeigt, werden in dem Regler 34 zusätzliche Signale verarbeitet. Der Regler 34 steht zu diesem Zweck mit einem Sollwertgeber 37 in Verbindung, mit dem unabhängig von der jeweiligen Regelungsart bestimmte Sollwerte vorgebbar sind. Ferner ist ein Steller 38 mit dem Regler 34 verbunden, mit dem unterschiedliche Regelungsarten wie zum Beispiel Lage-, Zugkraft-, Schlupf-Regelung vorwählbar sind und zugleich auch beliebige Mischungsverhältnisse einsteuerbar sind. Ferner ist eine Sicherheitseinrichtung 39 mit dem Regler 34 verbunden, die bei Kabelbruch, Masseschluß oder Kurzschluß usw. wirksam wird und das Regelventil 17 automatisch in seine Neutralstellung steuert. Ferner erhält der Regler 34 Signale von dem Radarsensor 24, aus denen die absolute Fahrgeschwindigkeit des Traktors 10 relativ zum Boden ermittelt werden kann. Weiterhin steht der Regler 34 mit dem Getriebe 27 in Wirkverbindung, wo durch die Sensoren 28, 29, 31 im Getriebe abfragbare Funktionszustände ermittelt werden und davon abhängige Signale dem Regler 34 zugeführt werden. Dabei kann die Funktion des Drehzahlgebers 26 zur Ermittlung der theoretischen Fahrgeschwindigkeit ebenfalls aus dem Getriebe 27 hergeleitet werden. Der Regler 34 erhält ferner die Signale eines zum Schnellaushubdienenden Stellhebels 41, der zwischen seinen beiden Schaltstellungen Regelstellung und Transportstellung umschaltbar ist. Zur Vorwahl der maximalen Lage beim Aushub des Anbaugeräts 11 ist zwischen dem Stellhebel 41 und dem Regler 34 noch ein Begrenzer 42 geschaltet.

Die Wirkungsweise der elektrohydraulischen Regeleinrichtung 19 bei einem normalen Arbeitsvorgang des Traktors 10, zum Beispiel Pflügen, sowie die grundsätzliche Funktion des Schwingungsdämpfungs-Systems, werden als an sich bekannt vorausgesetzt. Um nun zu verhindern, daß sich das Schwingungsdämpfungs-System bei bestimmten Betriebszuständen und Arbeitsabläufen der Regeleinrichtung 19 negativ auswirken kann, wird die Wirksamkeit dieses Schwingungsdämpfungs-Systems abgegrenzt. Zu diesem Zweck verarbeitet der Regler 34 die ihm eingegebenen Signale in einer Weise, daß vor dem Wirksamwerden des Schwingungsdämpfungs-Systems bestimmte Einschaltbedingungen erfüllt sein müssen. Zur näheren Erläuterung der Arbeitsweise des Reglers 34 wird auf Figur 3 bezug genommen, aus dessen Flußdiagramm die Einschaltbedingungen näher hervorgehen.

Wie die Figur 3 näher zeigt, ist eine erste und wichtigste Einschaltbedingung, daß der Stellhebel 41 in eine Transportstellung 43 verstellt ist. Es wird dabei von der Überlegung ausgegangen, daß die Schwingungsdämpfung nur in Transportfahrt benötigt wird und diese durch die sogenannte Transportstellung am Bedienteil signalisiert wird. Befindet sich der Stellhebel 41 in dieser Stellung, können dadurch zum Beispiel nicht benötigte Regelungsarten wie Druckregelung oder externe Tastregelung oder Schlupfregelung automatisch ausgeblendet werden. Der Regler 34 frägt daher in einem ersten Schritt 44 ab, ob diese Einschaltbedingung der Transportstellung 43 erfüllt ist. Bei einem Nein-Signal wird ein Zustand 45 wirksam, nämlich Schwingungsdämpfung-Aus. Bei einem Ja-Signal am ersten Schritt 44 wird eine logische Schaltstufe 46 angesteuert, welche abhängig von zusätzlichen Bedingungen den anderen Zustand 47, nämlich Schwingungdämpfung-Ein ansteuern kann. Beim Zuschalten der Schwingungdämpfung wird automatisch vorgesehen, daß die vom Anbaugerät 11 beim Schwingen erreich- bare obere Endlage $S_E$ um einen Sicherheitsabstand $\Delta s$ tieferge- stellt wird, damit Regelbewegungen nach oben nicht zur Kollision des Anbaugeräts 11 mit der Kabine auf dem Traktor 10 führen können. Die obere Endlage $S_E$ ist mit Hilfe des Begrenzers 42 am Bedienteil einstellbar.

Ferner wird vom Regler 34 als Einschaltbedingung die Fahrgeschwindigkeit 49 verarbeitet, um durch Abgrenzung bestimmter Geschwindigkeitsbereiche ein unerwünschtes Ansprechen der Schwingungsdämpfung beim Arbeiten des Traktors 10 zu verhindern. Dabei wird in einem zweiten Schritt 51 abgefragt, ob eine ermittelte Geschwindigkeit v größer ist als eine als Grenzwert dienende, niedrige Geschwindigkeit $v_g$. Auf diese Weise kann bei Rückwärtsfahrt und bei niedrigen Geschwindigkeiten, die in einem Bereich unterhalb von 5 - 8 km/h liegen können, die Schwingungstilgung automatisch ausgeblendet werden. Liegt die ermittelte Fahrgeschwidigkeit über dem vorgegebenen Schwellwert, so wird über ein Ja-Signal ein logisches Schaltglied 52 angesteuert, das bei Vorliegen einer zusätzlichen Schaltbedingung ein Ausgangssignal an die Schaltstufe 46 gibt. Für die Ermittlung der Fahrgeschwindigkeit 49 kann dabei der Radarsensor 24 verwendet werden, der die tatsächliche Geschwindigkeit über Grund aufnimmt; es kann aber auch die theoretische Fahrgeschwindigkeit vom Drehzahlgeber 26 oder von einem anderen geschwindigkeitsabhängigen Signalgeber am Getriebe 27 abgenommen werden, da in der Regel bei einer Transportfahrt des Traktors 10 der Schlupf vernachlässigbar gering ist. Selbstverständlich können die hierbei verwendeten Sensoren gleichzeitig auch für andere Steuer- und Regelaufgaben eingesetzt werden.

Für die Begrenzung von Geschwindigkeitsbereichen werden als Einschaltbedingungen auch Funktionszustände im Getriebe 27 abgefragt. Dabei wird in einem dritten Schritt 53 aus den Signalen des ersten Sensors 28 ermittelt, ob der Allrad-Antrieb ausgeschaltet ist. Bei einem Ja-Signal wird ein logisches Schaltglied 54 angesteuert. Es wird daraufhin über einen vierten Schritt 55 anhand der vom zweiten Sensor 29 gemeldeten Signale ermittelt, ob im Getriebe 27 die Differentialsperre ausgeschaltet ist und bei einem Ja-Signal ein logisches Schaltglied 56 angesteuert. Daraufhin wird auf einem fünften Schritt 57 mit Hilfe der Signale des dritten Sensors 31 geprüft, ob der eingelegte Getriebegang G größer ist als ein als Schwellwert vorgesehener, niedriger Getriebegang. Ein Ja-Signal der fünften Schrittstufe 57 wird dem logischen Schaltglied 52 zugeführt, dessen Ausgangssignal die Schaltstufe 46 ansteuert. Ist irgendeine der drei getriebespezifischen Einschaltbedingung nicht erfüllt, so wird der Zustand 45 wirksam und die Schwingungsdämpfung ist ausgeschaltet.

Wie Figur 3 ferner zeigt, ist als zusätzliche Einschaltbedingung vorgesehen, bestimmte Meßgrößen 59 abzufragen. Um den Regler 34 und damit auch die Hydraulikanlage nicht unnötig zu belasten, soll das Schwingungsdämpfungssystem nur in einem Meßbereich der Sensoren wirken, in dem auch eine Verbesserung des Fahrverhaltens bzw. der Lenkfähigkeit durch die Regelung zu erwarten ist. Bei der Schwingungsdämpfung verwendbare Meßgrößen werden daher in einem sechsten Schritt 58 daraufhin abgefragt, ob die jeweilige Istwertgröße größer ist als ein vorgegebener Grenzwert. Wird dabei, wie in Figur 1 dargestellt, für die Schwingungsdämpfung eine Unterlenker-Horizontalkraftregelung vorgesehen, so wird die Schwingungdämpfung erst bei Überschreiten einer bestimmten Summen-Druckkraft wirksam. Für die Schwingungsdämpfung kann auch eine Vertikalkraft in den Anlenkpunkten oder einem Gestängeelement benutzt werden, wobei auch hierbei die Schwingungstilgung erst nach Überschreiten eines bestimmten Grenzwerts wirksam werden kann. Die Benutzung der Horizontalkräfte für die Schwingungstilgung hat den Vorteil, daß sie gemeinsam für eine Zugkraftregelung genutzt werden können. Andererseits hat die Verwendung der Meßgröße Vertikalkraft den Vorteil, daß sie auch bei Geräten ohne Dreipunktanbau anwendbar ist. Für die Schwingungstilgung kann ferner auch der Druck im Kraftheber 15 benutzt werden, was ebenfalls eine gemeinsame Nutzung eines Drucksensors 60 für eine Druckregelung erlaubt. Ferner eignet sich auch die Vorderachslast als Meßgröße für die Schwingungstilgung. Bei der Verwendung der Meßgröße Zylinderdruck und Vorderachslast wird in entsprechender Weise im sechsten Schritt 58 abgefragt, ob bestimmte Schwellwerte über bzw. unterschritten werden. Mit einem Ja-Signal vom sechsten Schritt 58 wird die logische Schaltstufe 46 angesteuert, während ein Nein-Signal den Zustand 45 bewirkt. Da bei der Schwingungsdämpfung sehr hohe Kräfte auftreten können, kann es zweckmäßig sein, bei einer gemeinsamen Sensornutzung mit anderen Regelungsarten unterschiedliche Meßbereiche vorzusehen; so kann zum Beispiel bei Schwingungstilgung ein erweiterter Druckbereich am Kraftmeßbolzen verarbeitet werden.

Als weitere Einschaltbedingung kann der Lage-Istwert 61 vorgesehen werden, um eine Eingrenzung der Schwingungtilgung auf einen bestimmten Hubbereich zu erzielen. Dadurch läßt sich zum Beispiel sicherstellen, daß in dem unten liegenden Drittel des Arbeitsbereiches keine ungewollten Regelbewegungen auftreten können, so daß zum Beispiel beim Pflügen des Traktors 10 keine Störeinflüsse aus der Schwingungstilgung auftreten. In einem siebten Schritt 62 wird dazu abgefragt, ob die Lage s größer ist als ein vorgegebener Schwellwert $s_g$, so daß bei einem Ja-Signal die Schaltstufe 46 angesteuert wird. Diese Funktion der Einschaltbedingung Lage-Istwert 61 kann bei Bedarf auch mit der Einschaltbedingung Transportstellung 43 kombiniert werden.

Die logische Schaltstufe 46 kann nun in vorteilhafter Weise so ausgebildet werden, daß sämtliche Einschaltbedingungen 43, 49, 27, 59, 61 gleichzeitig erfüllt sein müssen, damit der Regler 34 den anderen Zustand 47, Schwingungsdämpfung-Ein, bewirkt. Andererseits kann es auch für eine einfache und kostengünstige Lösung ausreichen, wenn der Regler 34 für das Wirksamwerden der Schwingungsdämpfung lediglich die Einschaltbedingungen Transportstellung 43 und Fahrgeschwindigkeit 49 allein berücksichtigt. Da die Schwingungsdämpfung primär bei Transportfahrten wirksam werden soll, bei denen der Traktor Geschwindigkeiten im Bereich von 20 bis 40 km/h erreichen kann, genügt es in einem solchen Fall, daß die Fahrgeschwindigkeit von einem theoretischen Wert abgeleitet wird, wofür sich besonders der Drehzahlgeber 26 eignet. Aus sicherheitstechnischen Gründen kann es zweckmäßig sein, als Einschaltbedingungen neben der Transportstellung 43 und der Fahrgeschwindigkeit 49 Funktionszustände im Getriebe 27 zusätzlich abzufragen, wobei die schrittweise Anfrage anstelle der in Figur 3 dargestellten Folge auch in anderer Reihenfolge und in anderer Kombination durchführbar ist.

Die Lage, auf die das Hubwerk bei der Schwingungsdämpfung immer wieder einregelt, wird mit dem Lagesensor 23 gemessen, der auch für die Lageregelung als solche im Traktor 10 benutzt wird. Zur Stabilisierung der Schwingungstilgung ist die Aufschaltung eines D-Anteils des Lagesignals vorgesehen. Nach jedem Senken- bzw. Hebenvorgang findet somit ein Nachregeln auf den ursprünglichen Lagewert statt.

Für die Arbeitsweise des Reglers 34 bei der Schwingungsdämpfung ist es vorteilhaft, wenn er hierbei einen Mischwert aus der Lage s und dem dynamischen Kraftanteil $F_{dyn.}$ regelt. Beim Wirksamwerden der Schwingungsdämpfung wird der Regler 34 automatisch auf die für diesen Regelkreis optimierten Regelparameter wie zum Beispiel Totzone, Proportionalbereich usw. geschaltet, wobei diese unabhängig sind von den bei der normalen Kraft- bzw. Lageregelung verwendeten Regelparametern. Ferner läßt sich der Regler 34 so ausbilden, daß seine Führungsgröße von einem endlageabhängigen Maximal-Signal bestimmt wird. Es kann dann die Regelung bei der Schwingungstilgung so ausgelegt werden, daß oberhalb der Führungshöhe kleinere Regelbewegungen auftreten als unterhalb, wobei diese Regelbewegungen im Grenzfall zu Null werden können. In Richtung Heben ist somit nur ein kleiner, definierter Hubwinkel zulässig, so daß ein Sicherheitsabstand vom Anbaugerät 11 zur Kabine stets gewahrt bleibt. Auch für die Senkbewegung bei der Schwingungsdämpfung kann vorgesehen werden, daß sie nur über eine bestimmte Hubhöhe bzw. einen Hubwinkel möglich ist, so daß nur ein definierter maximaler Betrag zulässig ist. Danach wird das Regelventil in seine Neutralstellung gesteuert, so daß eine Sicherheitsschaltung erreicht ist. Ferner läßt sich der Regler 34 so ausbilden, daß eine zum Signalhub und zu der Signalfrequenz abhängige Verstärkung vorgesehen ist. Ferner ist der Regler so ausgebildet, daß das Schwingungsdämpfungs-System höherfrequente Schwingungen unterdrückt und nur auf niederfrequente Fahrzeugschwingungen reagiert, die beispielsweise in einem Bereich bis zu 3 Hertz liegen.

Selbstverständlich sind Änderungen an dem gezeigten Fahrzeug mit Schwingungsdämpfungs-System möglich, ohne vom Gedanken der Erfindung abzuweichen. So kann beim Traktor 10 anstelle oder zusätzlich zu den gezeigten Sensoren ein Drehzahlsensor 63 an der Vorderachse für die Ermittlung geschwindigkeitsabhängiger Signale benutzt werden oder über einen Vorderachslast-Sensor 64 zur Schwingungsdämpfung benutzbare Signale erzeugt werden. Auch mit den Signalen des Drucksensors 60 am Kraftheber 15 läßt sich eine Schwingungsdämpfung erzielen. Ferner kann es vorteilhaft sein, als Einschaltbedingung auch die Fahrzeugbeschleunigung zu berücksichtigen, die gerade beim Start des Traktors 10 relativ hohe Werte erreichen kann. Zu diesem Zweck wird die Fahrzeugbeschleunigung direkt gemessen oder es werden über geeignete Sensoren davon abhängige Größen erfaßt und mit diesen Signalen auf den Regler 34 bei der Schwingungstilgung so eingewirkt, daß die Fahrsicherheit positiv beeinflußt wird. Zum Beispiel kann dann beim Beschleunigen des Traktors 10 ein Abheben der Vorderachse durch eine wirksame Senkbewegung des Hubwerks vermieden werden.

**Ansprüche**

1. Landwirtschaftlich nutzbare Zugmaschine, insbesondere Traktor oder Baumaschinen-Fahrzeug, mit einem System zur dynamischen Stabilisierung seiner Bewegungen, insbesondere von Nickschwingungen um eine im wesentlichen horizontale Schwingungsachse, mit einem gelenkig an der Zugmaschine befestigten Anbaugerät und einem zu dessen Bewegung vorgesehenen Kraftheber, der Teil einer auf Signale ansprechenden Regeleinrichtung ist, mit deren Hilfe über den Kraftheber das Anbaugerät im Bereich einer Transportstellung im Abhängigkeit von den Schwingungen der Zugmaschine so bewegbar ist, daß eine aktive Schwingungsdämpfung erreichbar ist, und mit einem die Regeleinrichtung beeinflussenden Umschaltmittel, das von einer Regelungsstellung in eine Transportstellung umschaltbar ist, in der das Schwingungsdämpfungs-System wirksam werden kann, dadurch gekennzeichnet, daß die Fahrgeschwindigkeit der Zugmaschine (10) erfassende Sensormittel (24, 26) angeordnet sind und daß Steuermittel (34, 18) vorgesehen sind, welche das in Transportstellung wirksame Schwingungsdämpfungs-System bei Unterschreiten einer vorbestimmten Mindest-Fahrgeschwindigkeit abschaltet.

2. Zugmaschine nach Anspruch 1, dadurch gekennzeichnet, daß als Sensormittel ein die tatsächliche Fahrgeschwindigkeit gegenüber dem Boden ermittelnden Sensor vorgesehen ist, der insbesondere als Radarsensor (24) ausgebildet ist.

3. Zugmaschine nach Anspruch 1, dadurch gekennzeichnet, daß als Sensormittel ein die theoretische Fahrgeschwindigkeit ermittelnder Sensor vorgesehen ist, der insbesondere als ein die Raddrehzahl ermittelnden Drehzahlgeber (26) ausgebildet ist.

4. Zugmaschine nach einem der Ansprüche 1 bis 3, dadurch gekennzeichnet, daß wenigstens ein einen Funktionszustand im Getriebe der Zugmaschine (10) abfragender Sensor (28, 29, 31) angeordnet ist, der mit den das SchwingungsdämpfungsSystem beeinflussenden Steuermittel (34, 18) in Wirkverbindung steht.

5. Zugmaschine nach Anspruch 4, dadurch gekennzeichnet, daß dem Getriebe (27) ein die Allradsteuerung abfragender Sensor (28) zugeordnet ist.

6. Zugmaschine nach einem der Ansprüche 4 oder 5, dadurch gekennzeichnet, daß dem Getriebe (27) ein die Differentialsperre abfragender, zweiter Sensor (29) zugeordnet ist.

7. Zugmaschine nach einem der Ansprüche 4 bis 6, dadurch gekennzeichnet, daß dem Getriebe (27) ein dessen Schalthebelstellung bzw. den Getriebegang abfragender, dritter Sensor (31) zugeordnet ist.

8. Zugmaschine nach einem oder mehreren der Ansprüche 1 bis 7, dadurch gekennzeichnet, daß die die Fahrgeschwindigkeit erfassenden Sensormittel (24, 26) einerseits und andererseits die ersten bis dritten Sensoren (28, 29, 31) zur Erfassung der getriebespezifischen Funktionszustände über logische Schaltmittel (51 - 57, 46) so mit den Steuermitteln (34) des Schwingungsdampfungs-System verknüpft sind, daß nur bei Erfüllung mindestens eines geschwindigkeitsabhängigen und einer getriebespezifischen, insbesondere aller, Einschaltbedingung das Schwingungsdämpfungs-System wirksam sein kann.

9. Zugmaschine nach einem oder mehreren Ansprüche 1 bis 8, dadurch gekennzeichnet, daß Mittel (34, 58, 59) vorgesehen sind, mit denen von den Meßgrößen abgeleitete Signale als Einschaltbedingungen für das Schwingungsdämpfungs-System verwendbar sind.

10. Zugmaschine nach Anspruch 9, dadurch gekennzeichnet, daß die Mittel (59) ein eine Horizontal- bzw. Vertikalkraft ermittelndes Kraftmeßglied (22) und/oder ein den Druck im Kraftheber (15) ermittelnder Drucksensor (60) und/oder einen die Vorderachslast ermittelnden Kraftsensor (64) umfassen.

11. Zugmaschine nach einem oder mehreren der Ansprüche 1 bis 10, dadurch gekennzeichnet, daß Mittel (61, 62) vorgesehen sind, mit denen ein von dem Istwert des Lagesensors (23) abgeleitetes Signal als Einschaltbedingung für das Schwingungsdämpfungs-System verwendbar ist.

12. Zugmaschine nach einem oder mehreren der Ansprüche 1 bis 11, dadurch gekennzeichnet, daß Mittel (34, 42) zur Bestimmung des Endanschlags für das ausgehobene Anbaugerät (11) vorgesehen sind, die bei eingeschaltetem Schwingungsdämpfungs-System eine um einen bestimmbaren Betrag ($\Delta$s) niedrigere Endlage steuern.

13. Verfahren zum Betrieb einer landwirtschaftlich nutzbaren Zugmaschine mit einem System zur dynamischen Stabilisierung seiner Bewegungen im wesentlichen um eine horizontale Schwingachse, mit einem über einen Kraftheber beweglich an der Zugmaschine angelenkten Anbaugerät, das in Transportstellung während der Fahrt der Zugmaschine in einer die Schwingungen der Zugmaschine dämpfenden Weise bewegt wird, dadurch gekennzeichnet, daß das in der Transportstellung zugeschaltete Schwingungsdämpfungs-System erst bei Überschreiten eines vorbestimmten Grenzwertes der Fahrgeschwindigkeit wirksam wird.

14. Verfahren nach Anspruch 13, dadurch gekennzeichnet, daß als Fahrgeschwindigkeit die absolute und/oder die theoretische Fahrgeschwindigkeit des Zugfahrzeugs (10) benutzt wird.

15. Verfahren zum Betrieb einer landwirtschaftlich nutzbaren Zugmaschine nach Anspruch 13 oder 14, dadurch gekennzeichnet, daß als Einschaltbedingung für das Schwingungsdämpfungs-System neben der Transportstellung (43) und der Fahrgeschwindigkeit (49) mindestens ein Funktionszustand im Getriebe (27) der Zugmaschine benutzt wird.

16. Verfahren nach Anspruch 15, dadurch gekennzeichnet, daß als Funktionszustände der Allradantrieb und/oder die Differentialsperre und/oder die Getriebegänge benutzt werden.

17. Verfahren zum Betrieb einer landwirtschaftlich nutzbaren Zugmaschine nach einem der Ansprüche 13 bis 16, dadurch gekennzeichnet, daß als Einschaltbedingungen das Überschreiten vorbestimmter Grenzwerte durch kraftabhängige Meßgrößen, insbesondere Horizontalkraft, Vertikalkraft, Zylinderdruck, Vorderachslast benutzt werden.

18. Verfahren nach einem der Ansprüche 13 bis 17, dadurch gekennzeichnet, daß als zusätzliche Einschaltbedingung ein vom Istwert der Lage abgeleitetes Signal benutzt wird, mit dem das Schwingungsdämpfungs-System in einem vorwiegend dem Arbeitsbereich des Anbaugeräts entsprechenden, unteren Teil seines Hubbereiches ausgeschaltet wird.

19. Verfahren nach einem der Ansprüche 13 bis 18, dadurch gekennzeichnet, daß die Einschaltbedingungen wie Transportstellung, Fahrgeschwindigkeit, Funktionszustände im Getriebe, Mindestwerte von Meßgrößen sowie Lage-Istwert gleichrangig zueinander zum Aktivieren des Schwingungsdämpfungs-Systems benutzt werden.

20. Verfahren nach einem der Ansprüche 13 bis 19, dadurch gekennzeichnet, daß beim Zuschalten des Schwingungsdämpfungs-Systems die obere Endlage ($S_E$) für das Anbaugerät (11) automatisch um einen Sicherheitsabstand ($\triangle s$) tiefer gestellt wird.

21. Verfahren nach einem der Ansprüche 13 bis 20, dadurch gekennzeichnet, daß das Schwingungsdämpfungs-System höherfrequente Schwingungen unterdrückt und nur auf niederfrequente Schwingungen reagirt, die insbesondere im Bereich bis zu 3 Hertz liegen.

FIG.1

EP 0 433 669 A1

FIG. 2

EP 0 433 669 A1

# FIG. 3

EP 0 433 669 A1

# EUROPÄISCHER RECHERCHENBERICHT

Nummer der Anmeldung

## EP 90 12 1928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 299 223  (ROBERT BOSCH GMBH)<br>* Spalte 3, Zeile 31 - Spalte 4, Zeile 22; Ansprüche 1, 12; Figur 1 *<br>– – – | 1-3,13,14 | B 62 D<br>37/04<br>A 01 B 63/00<br>A 01 B 73/00 |
| Y | EP-A-0 241 748  (ROBERT BOSCH GMBH)<br>* Spalte 2, Zeile 48 - Spalte 4, Zeile 39; Figur *<br>– – – | 1-3,13,14 | |
| A | EP-A-0 090 971  (VICKERS INC.)<br>* Zusammenfassung; Ansprüche 1, 10; Figur 1 *<br>– – – | 1,13 | |
| A,D | DE-A-3 446 811  (ROBERT BOSCH GMBH)<br>* Zusammenfassung; Anspruch 1; Figur *<br>– – – | 1 | |
| A,D | DE-A-3 346 892  (MANNESMANN REXROTH GMBH)<br>* Seite 11, Zeilen 12 - 34; Figur 1 *<br>– – – | 1 | |
| A | DE-A-2 856 583  (A. ULRICH)<br>* Anspruch 1; Figuren 1, 5 *<br>– – – | 1 | |
| A | EP-A-0 167 681  (DEERE & CO.)<br>* Figur 1 *<br>– – – | 2,3 | RECHERCHIERTE SACHGEBIETE (Int. Cl.5) |
| A | FR-A-2 595 534  (ROBERT BOSCH GMBH)<br>* Zusammenfassung; Figur 1 *<br>– – – | 2,3 | A 01 B<br>B 62 D |
| A | DE-A-3 501 568  (MANNESMANN REXROTH GMBH)<br>– – – – – | | |

Der vorliegende Recherchenbericht wurde für alle Patentansprüche erstellt

| Recherchenort | Abschlußdatum der Recherche | Prüfer |
|---|---|---|
| Berlin | 06 März 91 | MERCKX A M |